# EUROPÄISCHE PATENTSCHRIFT

(11) **EP 3 458 336 B1**
(45) Veröffentlichungstag und Bekanntmachung des Hinweises auf die Patenterteilung: **15.04.2020**
(21) Anmeldenummer: 17722806.1
(22) Anmeldetag: 11.05.2017
(51) Int. Cl.: B62D 5/00

(54) **STEER-BY-WIRE-LENKSYSTEM MIT KUPPELBAREN EINZELRADLENKUNGEN**
STEER-BY-WIRE STEERING SYSTEM WITH COUPLEABLE INDIVIDUAL WHEEL STEERINGS
SYSTÈME DE DIRECTION À COMMANDE PAR CÂBLE AVEC DES DIRECTIONS DE ROUE INDIVIDUELLEMENT COUPLABLE

(30) Priorität: 20.05.2016 DE 102016006088
(43) Veröffentlichungstag der Anmeldung: 27.03.2019
(73) Patentinhaber: thyssenkrupp Presta AG, 9492 Eschen (LI); thyssenkrupp AG, 45143 Essen (DE)
(72) Erfinder: POLMANS, Kristof, 6464 Tarrenz (AT)
(74) Vertreter: thyssenkrupp Intellectual Property GmbH
(86) Internationale Anmeldenummer: PCT/EP2017/061364
(87) Internationale Veröffentlichungsnummer: WO 2017/198549

(56) Entgegenhaltungen:
- WO-A1-2015/144482
- DE-U1-202014 004 853

## Beschreibung

Die vorliegende Erfindung betrifft ein Steer-by-Wire-Lenksystem mit den Merkmalen des Oberbegriffs des Anspruchs 1 und ein Verfahren zum Ansteuern eines Steer-by-Wire-Lenksystems mit den Merkmalen des Oberbegriffs des Anspruchs 9.

Elektromechanische Servolenkungen unterstützen die vom Fahrer aufgebrachte Lenkkraft. Die Lenkkraft, die der Fahrer über ein Lenkrad vorgibt, wird in einen Torsionsstab geleitet, der sich kraftabhängig verdreht. Dieses Drehmoment misst ein Sensor, der diese Information an ein elektronisches Steuergerät weiterreicht. Das wiederum gibt dem elektrischen Servomotor präzise Befehle, welches Zusatzdrehmoment in die Lenkung eingeleitet werden soll. Bei Steer-by-Wire-Systemen gibt es keine direkte mechanische Kopplung zwischen dem Lenkrad und dem Lenkgestänge und die Fahrzeugräder werden direkt mit Hilfe eines Servomotors bewegt.

Die lenkbaren Fahrzeugräder solcher Lenkungen sind in der Regel mit Spurstangen mechanisch zwangsgekoppelt. Eine exakte Spurführung jedes lenkbaren Fahrzeugrades und eine Verschwenkung der Räder um einen Lenkwinkel bis zu 90° sind damit nicht möglich.

Einzelradlenkungen können dieses Problem lösen. Bei Einzelradlenkungen, wie beispielsweise in der Schrift US 2009/071743 A1 offenbart, erfolgt die Verschwenkung der einzelnen Räder über einzelne Elektromotoren.

Für die Auslegung der Elektromotoren ist stets das Parkieren als das Manöver mit der höchsten Summenspurstangenkraft bzw. dem höchstmöglichen Achslastfall maßgebend. In einem Steer-by-Wire-Lenksystem mit Einzelradlenkung wird der Lenkeinschlag der beiden gelenkten Räder jeweils mittels eines Aktuators umgesetzt. Jeder dieser Aktuatoren muss auf die maximale Spurstangenkräfte ausgelegt werden, welche auf das jeweils mit ihm verbundene Rad wirken. Die Aktuatoren müssen daher besonders leistungsstark ausgebildet sein, um die maximalen Verschwenkkräfte zum Verschenken der lenkbaren Räder bereitstellen zu können.

Aus der DE 20 2014 004 853 U1 ist ein Steer-by-wire-Lenksystem der eingangs genannten Art bekannt. Durch die Anordnung der Kupplung kann jedoch die optimale Nutzung des Bauraums und die Montage beeinträchtigt sein.

Es ist Aufgabe der vorliegenden Erfindung, ein Steer-by-wire-Lenksystem mit einer kostengünstigeren Einzelradlenkung anzugeben, welches flexibler einsetzbar ist.

Diese Aufgabe wird von einem Steer-by-wire-Lenksystem mit den Merkmalen des Anspruchs 1 gelöst.

Demnach ist ein Steer-by-Wire-Lenksystem für Kraftfahrzeuge mit wenigstens zwei auf die gelenkten Räder wirkenden, in Abhängigkeit eines Fahrerlenkwunsches elektronisch geregelten Lenkstellern, mit einem Rückstellmomente auf ein Lenkrad übertragenden Feedback-Aktuator, und einer Steuereinheit, die den Feedback-Aktuator und die wenigstens zwei Lenksteller zur Erzeugung von Antriebsleistung ansteuert, wobei die wenigstens zwei Lenksteller jeweils einen Aktuator mit einer Abtriebswelle aufweisen, wobei in einem Normalfall jedem lenkbaren Fahrzeugrad ein einziger Lenksteller mit Aktuator in Form einer Einzelradlenkung zugeordnet ist und durch eine Drehung der Abtriebswelle des Aktuators eine Verdrehung des jeweiligen lenkbaren Fahrzeugrades um eine Schwenkachse bewirkt wird, vorgesehen, wobei eine schaltbare Kupplung vorgesehen ist, die derart ausgestaltet ist, dass sie im Normalfall geöffnet ist und in einem Sonderfall geschlossen ist, wobei die Kupplung im geschlossenen Zustand die Einzelradlenkungen derart miteinander verbindet, dass Antriebsleistung von einer Einzelradlenkung zu der anderen Einzelradlenkung zur Verdrehung eines lenkbaren Fahrzeugrades übertragen werden kann, bei dem die steuerbare Kupplung mit wenigstens einem Aktuator über eine biegsame Welle verbunden ist.

Durch die erfindungsgemäße Verbindung der Aktuatoren im Sonderfall, bei dem besonders hohe Spurstangenkräfte anliegen wie beispielsweise im Sonderfall des Parkierens, können die Aktuatoren kleiner ausgestaltet werden und dabei trotzdem die benötigten hohen Verschwenkkräfte bereitstellen. Die beiden Aktuatoren können als ein Aktuator aufgefasst werden. Da die hohen Spurstangenkräfte dann auf einen Aktuator wirken, können beide auf ca. 50 % der maximalen Summenspurkraft ausgelegt werden. Der jeweils zu tief ausgelegte Aktuator erhält Unterstützung des jeweils zu hoch ausgelegten Aktuators. Beispielsweise nach dem Parken wird die Verbindung gelöst. Durch die schwächer ausgelegten Motoren werden Kosten gespart. Jedoch ist nicht jeder Parkiervorgang ein Sonderfall, sondern dieser liegt nur dann vor, wenn ein Aktuator nicht in der Lage ist, die Verschwenkung ohne die Unterstützung des anderen Aktuators durchzuführen.

Dabei ist vorgesehen, dass die übertragene Antriebsleistung eine Rotation oder eine translatorische Bewegung bewirkt. Die Antriebsleistung kann beispielsweise in Form eines Drehmoments mittels einer drehfesten Verbindung übertragen werden, aber auch in Form von Translation, wenn beispielsweise die Einzelradlenkung jeweils ein Ritzel-Zahnstangen-System aufweist und die Zahnstangen kraftschlüssig miteinander gekoppelt werden, um eine translatorische Bewegung zu übertragen.

Vorzugsweise koppelt die schaltbare Kupplung im geschlossenen Zustand die Abtriebswellen des Aktuators drehfest um ein Drehmoment zu übertragen. Dabei ist es bevorzugt, wenn die Kopplung der schaltbaren Kupplung formschlüssig erfolgt, wobei die Kupplung ein Verdrehspiel aufweisen kann. Das Verdrehspiel erlaubt eine Bewegung der Wellen gegeneinander bis zu einem gewissen Grad ohne das Drehmoment übertragen wird. Erst wenn das Verdrehspiel überwunden ist, erfolgt die Drehmomentübertragung. Die Kupplung weist dabei eine geeignete Torsionssteifigkeit auf, um das Drehmoment adäquat zu übertragen und das Fahrzeug sicher zu steuern.

Eine Übertragung des Drehmoments wird dabei in beide Drehrichtungen gewährleistet.

In einer ersten möglichen Ausführungsform ist die steuerbare Kupplung mit wenigstens einem Aktuator über eine starre Welle verbunden. In einer bevorzugten Ausführungsform bildet die Verbindung eine biegsame Welle.

Es ist vorteilhaft, wenn die steuerbare Kupplung hydraulisch oder elektromagnetisch ausgebildet ist. Dabei kann es vorgesehen sein, dass die steuerbare Kupplung von der Steuereinheit ansteuerbar ist.

Die Aktuatoren sind bevorzugt Elektromotoren oder hydraulische Stellsysteme, wobei die Aktuatoren gemeinsam für die maximalen Spurstangenkräfte ausgelegt sind. Dadurch sind die Aktuatoren viel kleiner ausgebildet, als wenn sie jeweils einzeln in Form der Einzelradlenkung beim Parkieren für das Lenken der Räder zuständig wären.

Es kann vorgesehen sein, dass die wenigstens zwei Lenksteller bzw. Einzelradlenkungen Teil einer Allrad-Lenkung mit vier lenkbaren Fahrzeugrädern sind. Dabei können zwei oder vier Lenksteller vorgesehen sein, die jeweils untereinander verbunden werden. Bevorzugt dabei ist, die Lenksteller der vorderen Räder miteinander verbindbar auszugestalten und entsprechend die Lenksteller der hinteren Räder miteinander verbindbar auszugestalten.

Das erfindungsgemäße Steer-by-Wire Lenksystem kann sowohl als Vorderachslenkung als auch als Hinterachslenkung zum Einsatz kommen.

Weiterhin ist ein Verfahren zum Lenken des zuvor genannten Steer-by-Wire-Lenksystem vorgesehen, dass folgende Verfahrensschritte umfasst:
- Erfassen eines Zustandes des Kraftfahrzeugs, wobei zwischen einem Normalfall und dem Sonderfall Parkieren unterschieden wird;
- Ansteuern einer schaltbaren Kupplung in Abhängigkeit des erfassten Zustands, wobei
   - im Normalfall die Kupplung geöffnet wird bzw. geöffnet bleibt und jedem lenkbaren Fahrzeugrad ein einziger Lenksteller mit Aktuator in Form einer Einzelradlenkung zugeordnet ist und durch eine Drehung der Abtriebswelle des Aktuators eine Verdrehung des jeweiligen lenkbaren Fahrzeugrades um eine Schwenkachse bewirkt wird und wobei
   - im Sonderfall die Kupplung geschlossen wird, derart, dass Antriebsleistung von einer Einzelradlenkung zu der anderen Einzelradlenkung zur Verdrehung eines lenkbaren Fahrzeugrades übertragen wird.

Bevorzugte Ausführungsformen der Erfindung werden nachfolgend anhand der Zeichnungen näher erläutert. Für gleiche oder funktionsgleiche Elemente werden in allen Zeichnungen die gleichen Bezugszeichen verwendet. Es zeigen:
- Fig. 1:: eine schematische Darstellung einer Steer-by-Wire Lenkung mit Einzelradlenkung,
- Fig. 2:: eine räumliche Ansicht der Einzelradlenkung aus Fig. 1,
- Fig. 3:: eine schematische Darstellung einer Kupplung zwischen den Elektromotoren der Einzelradlenkungen,
- Fig. 4:: einen Längsschnitt durch eine geöffnete Kupplung;
- Fig. 5:: eine perspektivische Schnittdarstellung der Kupplung im geöffneten Zustand;
- Fig. 6:: eine perspektivische Schnittdarstellung der Kupplung im geschlossenen Zustand;
- Fig. 7:: eine schematische Darstellung einer Steer-by-Wire Lenkung mit Einzelradlenkung und gekuppelter Elektromotoren;
- Fig. 8:: eine räumliche Ansicht einer biegsamen Welle; sowie
- Fig. 9:: eine schematische Darstellung einer weiteren Ausführungsform einer Steer-by-Wire Lenkung.

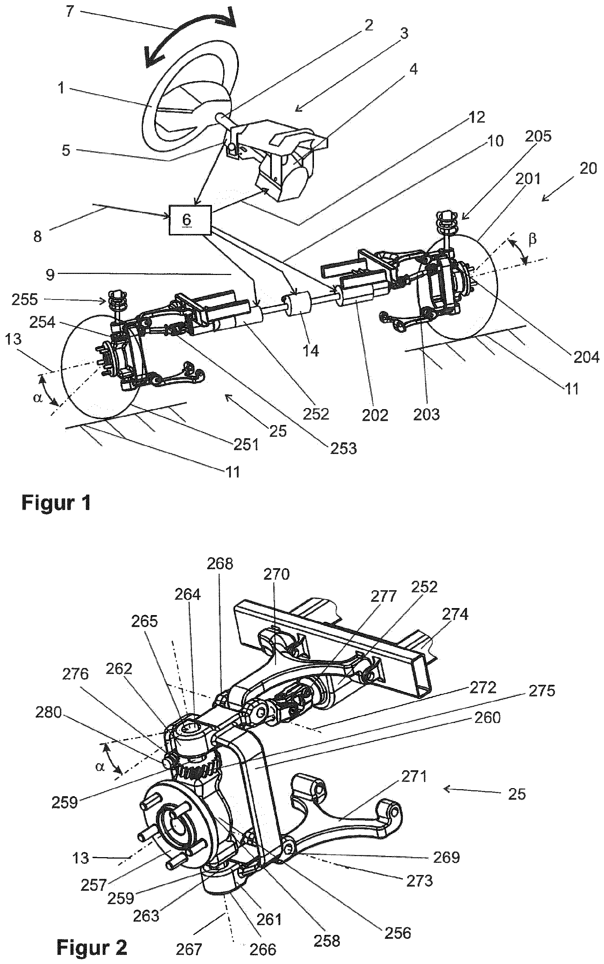

Die Figur 1 zeigt eine Steer-by-Wire-Lenkung mit Einzelradlenkung. Die Steer-by-Wire-Lenkung weist folgende Hauptkomponenten auf: ein Lenkrad 1, eine mit dem Lenkrad 1 verbundene Lenkwelle 2, eine die Lenkwelle 2 teilweise umgebende Lenksäule 3 mit darin angeordnetem Feedback-Aktuator 4, einen mit der Lenkwelle 2 verbundenen Drehsignalsensor 5, eine Steuerungs- und Regeleinheit 6 und zwei von der Steuerungs- und Regeleinheit 6 gesteuerte Einzelradlenkeinheiten 20, 25. Als Drehsignalsensor wird bevorzugt ein Drehwinkelsensor eingesetzt. Es ist jedoch auch denkbar und möglich, einen Drehmomentsensor und/oder eine Kombination aus beiden einzusetzen.

Die von einem Fahrer über das Lenkrad 1 in die Lenkwelle 2 eingebrachte Lenkbewegung 7 wird von dem Drehsignalsensor 5 gemessen und an die Steuerungs- und Regeleinheit 6 geleitet. Weiterhin werden andere Signale 8, wie beispielsweise die Fahrzeuggeschwindigkeit, Seitenwind, Querbeschleunigung der Steuerungs- und Regeleinheit 6 zugeführt. Daraus bestimmt die Steuerungs- und Regeleinheit 6 Lenksteuersignale 9, 10 zur Weiterleitung an die Einzelradlenkeinheiten 20, 25. Um dem Fahrer das gewohnte Lenkgefühl und die damit verbundenen Informationen zum Zustand des Kraftfahrzeuges und der Fahrbahn 11 zu vermitteln, errechnet die Steuerungs- und Regeleinheit 6 einen Stellwert 12 für den Lenkkraftsteller 4, der ein Gegendrehmoment in die Lenkwelle 2 einbringt.

Es ist jeweils eine Einzelradlenkeinheit 20, 25 für ein zu lenkendes Rad 201, 251 vorgesehen. Eine Einzelradlenkeinheit 20, 25 umfasst einen Elektromotor 202, 252, eine teleskopierbare Gelenkwelle 203, 253, ein Getriebe 204, 254, einen Achsschenkel, einen unteren Querlenker, einen oberen Querlenker und einen Dämpfer 205, 255.

Die Lenksteuersignale 9, 10 die zu den Einzelradlenkeinheiten 20, 25 geleitet werden, steuern die Elektromotoren 202, 252, die eine Verschwenkung der Fahrzeugräder 201, 251 um den jeweiligen gewünschten Schwenkwinkel α, β bewirken. Durch die mit dem Elektromotor 202, 252 verbundene Gelenkwelle 203, 253 wird die Drehung der Abtriebswelle des Elektromotors auf das Getriebe 204, 254 übertragen und damit die Schwenkbewegung der Fahrzeugräder 201, 251 eingeleitet.

Weiterhin ist eine Kupplung 14 vorgesehen, die die Einzelradlenkeinheiten 20, 25 kraft- oder drehmomentschlüssig verbinden kann. Die Kupplung wird von der Steuerungs- und Regeleinheit 6 gesteuert.

Figur 2 zeigt eine vergrößerte Ansicht einer Einzelradlenkeinheit 25.

Auf einer Antriebsachse 13 eines Fahrzeugrades 251 ist ein Achsschenkel 256 mit einer Nabe 257, die um die Antriebsachse 13 drehbar in einem Lager 258 gelagert ist, vorgesehen. Der Achsschenkel 256 weist winklig, zum Beispiel senkrecht, zur Antriebsachse 13 ausgerichtete Lagerzapfen 259 auf. Ein im Wesentlichen O-förmiger Rahmen 260 weist zwei gegenüberliegende, den Rahmen überragende Abschnitte 261, 262 auf, in denen Bohrungen 263, 264 vorgesehen sind. Diese Bohrungen 263, 264 sind von dem jeweiligen Lagerzapfen 259 durchsetzt, so dass sich Schwenklager 265, 266 ausbilden. Diese Schwenklager 265, 266 ermöglichen eine Verschwenkung des Achsschenkels 256 und der Nabe 257 um eine mit der Längsachse der Lagerzapfen 259 übereinstimmende erste Schwenkachse 267. Auf der gegenüberliegenden Seite der Schwenklager 265, 266 weist der Rahmen 260 zwei weitere Schwenklager 268, 269 auf, an die das jeweilige äußere Ende des oberen Querlenkers 270 bzw. des unteren Querlenkers 271 angelenkt ist. Die Querlenker 270, 271 sind vertikal verschwenkbar um eine zweite bzw. dritte Schwenkachse 272, 273 angeordnet, die senkrecht zur ersten Schwenkachse 267 ausgerichtet ist. Die Querlenker 270, 271 gabeln sich U-förmig von dem ersten Schwenklager 268, 269 in einwärtiger Richtung. Die inneren Enden des oberen und des unteren Querlenkers 270, 271 sind wiederum vertikal verschwenkbar an einem Chassis 274 angelenkt. Diese Anlenkung ist hier nur für den oberen Querlenker 270 dargestellt.

Zwischen Achsschenkel 256 und Rahmen 260 ist auf dem Lagerzapfen 259 ein Zahnrad 275 drehfest angeordnet. Dieses Zahnrad 275 kämmt mit einer Schneckenverzahnung 276 einer Antriebsspindel 280 der teleskopierbaren Gelenkwelle 253, die mit einer nicht dargestellten Abtriebswelle des Elektromotors 252 drehfest verbunden ist.

Der Elektromotor 252 ist dabei am Chassis 274 befestigt. Die Gelenkwelle 253 weist ein motorseitiges Kreuzgelenk 277 und, hier nicht dargestellt, ein getriebeseitiges Kreuzgelenk und ein dazwischen angeordnete Schiebestück auf. Das Schiebestück besteht aus einer inneren Längsverzahnung, die auf der Gelenkwelle angeordnet ist, und aus einem Gegenstück mit Innenverzahnung.

Die von der Steuerungs- und Regeleinheit 6 bestimmten Lenksteuersignale 9, 10 werden an die Einzelradlenkeinheiten 20, 25 weitergeleitet. Entsprechend wird der jeweilige Elektromotor 202, 252 angetrieben. Die Drehung des Elektromotors 252 wird mittels der Gelenkwelle 253 auf das Getriebe 254 übertragen, was eine Schwenkbewegung der nicht dargestellten Fahrzeugräder um die erste Schwenkachse 267 mit einem gewünschten Schwenkwinkel α bewirkt. Prinzipiell ist es, im Falle einer hier nicht dargestellten Konstruktion, auch möglich das Fahrzeugrad um 360° und mehr zu verschwenken. Durch die Einzelradlenkung ist es möglich die Fahrzeugräder mit einem sehr großen Schwenkwinkel zu verschwenken, so dass das Kraftfahrzeug zum Beispiel unter einem sehr steilen Winkel aus einer sehr engen Parklücke herausmanövriert werden kann. Da die Elektromotoren unabhängig voneinander gestellt werden können, sind spezielle Fahrkinematiken möglich, die ohne Einzelradlenkung nicht erreichbar wären. So können die Fahrzeugräder den idealen Ackermannwinkel einschlagen, was zu einer Minimierung des Reifenverschleißes führt und die Querdynamik des Kraftfahrzeugs erhöht. Durch die Lage der Schwenkachse 267 der Fahrzeugräder im Achsschenkel 256 (sog. Revo Knuckle Konzept) ist es möglich, den Hebelarm der Antriebskräfte um die Schwenkachse, den sogenannten Störkrafthebelarm oder Kingpin-Offset, deutlich zu verringern und so die resultierenden Lenkradmomente zu reduzieren.

Das erfindungsgemäße Steer-by-Wire Lenksystem kann ebenfalls mit anderen Aufhängungskonzepten, beispielsweise dem MacPherson Federbein oder einem Doppel-Querlenker-Konzept, kombiniert werden, denn das erfindungsgemäße Steer-by-Wire Lenksystem ist nicht auf eine bestimmtes Achskonzept beschränkt.

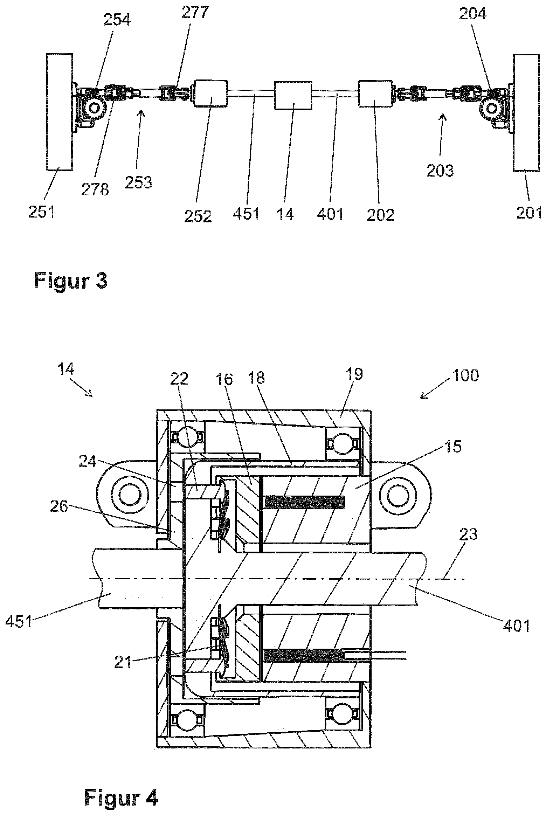

Figur 3 zeigt schematisch die Anordnung einer Kupplung 14 zwischen den Einzelradlenkeinheiten 20, 25. Beim Parkieren wird die Kupplung vorzugsweise geschlossen und beispielsweise ein drehfester Durchgriff zwischen den beiden Elektromotoren 202, 252 hergestellt.

Das Lenkgetriebe muss so ausgelegt werden, dass das Parkieren für den Fahrer so komfortable wie möglich zu bewältigen ist. Ein Drehen der Räder im Stand bedeutet für die Lenkung die maximale Belastung. Die erforderliche Spurstangenkraft steigt dabei mit zunehmendem Lenkwinkel an. Um die erforderlichen Kräfte beim Parken aufbringen zu können, werden in einem Ausführungsbeispiel der vorliegenden Erfindung die Elektromotoren 202, 252 abtriebsseitig verbunden.

Durch das Verbinden der beiden Aktuatoren könne diese als ein einzelner Aktuator betrachtet werden. Die beiden Aktuatoren können somit auf ungefähr die hälfte der maximalen Summenspurstangenkraft ausgelegt werden. Der in Abhängigkeit des Rangieren zu niedrig ausgelegt Aktuator erhält dann eine Unterstützung des zu hoch ausgelegten Aktuators. Nach dem Parken wird die Verbindung wieder gelöst und die Einzelradlenkungen werden getrennt voneinander von dem jeweiligen Elektromotor angetrieben. Durch die Verbindung der beiden Elektromotoren im Extremfall des Rangierens, können beide Elektromotoren schwächer ausgelegt werden, wodurch Kosten gespart werden können.

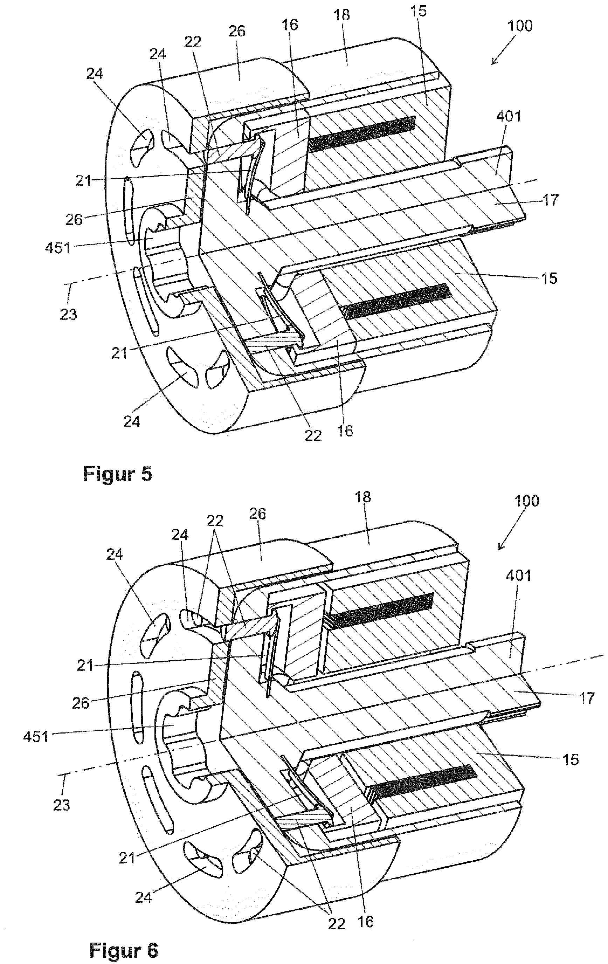

Die Figuren 4 und 5 zeigen eine Ausführungsform einer Kupplung 14, die zwei abtriebsseitige Wellen 401, 451 der Elektromotoren verbinden kann. Diese Kupplung 100 weist einen Stator 15 und einen Anker 16 auf. Die Kupplung ist im geöffneten Zustand dargestellt. Der Stator 15 ist als Elektromagnet ausgebildet und umgibt konzentrisch eine erste Welle 17, die der abtriebsseitigen Welle 401 entspricht, wobei die erste Welle 17 einstückig mit einem ersten Kupplungsteil 18 ausgebildet ist. Es ist ebenfalls denkbar und möglich, die erste Welle 17 mittels einer Welle-Nabe-Verbindung mit dem ersten Kupplungsteil 18 drehfest zu verbinden. Solche Welle-Nabe-Verbindungen sind hinreichend aus dem Stand der Technik bekannt. Der Stator 15 kann fest an dem Kupplungsgehäuse 19 angebracht sein. Es ist nicht erforderlich, dass er sich mit der ersten Welle 17 dreht. Der Anker 16 ist jedoch drehfest, aber axial verlagerbar mit dem ersten Kupplungsteils 18 und mit der ersten Welle 17 verbunden. Der Anker 16 ist von einer Tellerfeder 21 in die von dem Stator weg weisende Richtung vorgespannt, wobei der Anker 16 eine Anzahl von Raststiften 22 trägt. Ein zweites Kupplungsteil 26 weist eine Anzahl von zur Achse 23 parallele Rastelemente 24 auf, in die die Raststifte 22 zur Kopplung des ersten Kupplungsteil mit dem zweiten Kupplungsteil in Eingriff gebracht werden können.

Wenn der Stator 15 mit Strom beaufschlagt ist, zieht das Magnetfeld den Anker 16 gegen die Kraft des als Tellerfeder ausgebildeten Federelements 21 an den Stator 15 heran, so dass der Anker 16 die Raststifte 22 von dem zweiten Kupplungsteil 26 weg und aus den als bogenförmiges Langloch ausgebildeten Rastelementen 22 heraus zieht. Das zweite Kupplungsteil 26 und das erste Kupplungsteil 18 sind dann entkoppelt. Zwischen dem Stator 15 und dem Anker 16 ist im Strom beaufschlagten Zustand ein minimaler Luftspalt vorhanden, so dass Stator 15 und Anker 16 sich nicht berühren. Der zweite Kupplungsteil 26 und der erste Kupplungsteil 18 könnten sich somit relativ zueinander verdrehen. Die Kupplung 14, 100 befindet sich in einem geöffneten Zustand oder mit anderen Worten im ausgekuppelten oder entsperrten Zustand.

Figur 6 zeigt eine Darstellung entsprechend Figur 5, jedoch mit geschlossener Kupplung 100. Im Kupplungsfall wird der Stator 15 stromlos gemacht und der Anker 16 folglich aufgrund der Rückstellkraft des Federelements 21 von dem Stator 15 weg in die in Figur 6 dargestellte Position gedrängt. Die Raststifte 22 bewegen sich mit dem Anker 16 und rasten in die als Langloch ausgebildeten Rastelemente 24 ein. Dabei sind die Rastelemente 24 und Raststifte 22 so zueinander ausgebildet und angeordnet, dass zumindest ein Raststift 22 die Rotation lediglich in eine erste Drehrichtung (Uhrzeigersinn) und zumindest ein zweiter Raststift die Rotation lediglich in eine zweite Drehrichtung (Gegenuhrzeigersinn) überträgt. Dadurch kann eine Reduktion des Spiels bei einem Drehrichtungswechsel realisiert werden, da es nicht erforderlich ist, dass sich ein Raststift von einer Anlagefläche zur gegenüberliegenden Anlagefläche des Rastelements bewegt, da an dieser gegenüberliegenden Anlagefläche bereits ein Raststift anliegt. Das zweite Kupplungsteil 26 und das erste Kupplungsteil 18 sind dadurch drehfest miteinander gekoppelt.

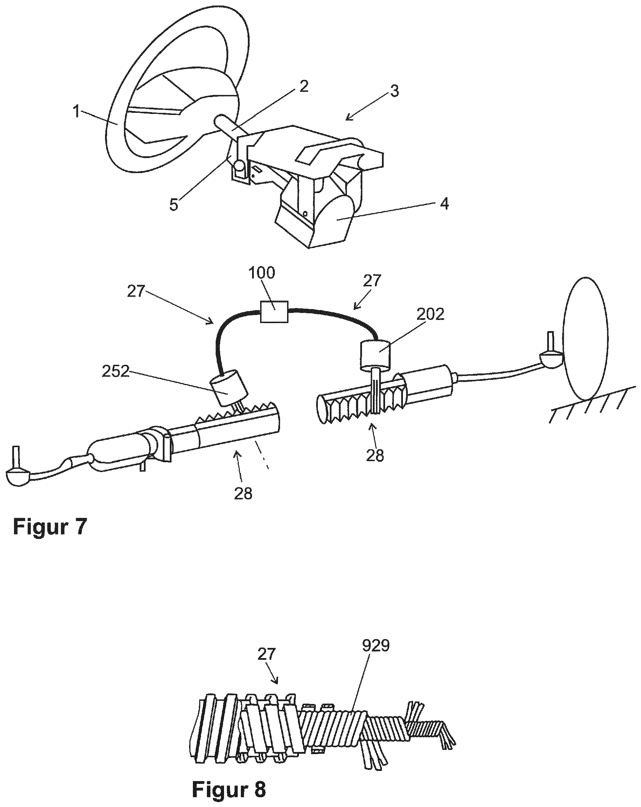

Figur 7 zeigt eine schematische Anordnung einer Steer-by-Wire-Lenkung, wobei die Kupplung 100 der Abtriebswellen der Elektromotoren 202, 252 über eine biegsame Welle 27 erfolgt. Im Gegensatz zu den vorherigen Ausführungsformen bei denen die Drehung des Elektromotors 252 mittels einer Gelenkwelle 253 auf das Getriebe 254 übertragen wurde, kann es allgemein auch vorgesehen sein, dass die Elektromotoren über ein Ritzel-Zahnstangen-System 28 eine Verschwenkung der Räder bewirken.

Wie in Figur 8 dargestellt, weist die biegsame Welle 27 ein flexibles Kabel mit mehreren Lagen entgegengesetzt schraubenförmig umeinander gewundener Drähte, die sogenannte Wellenseele 929, auf. Die Wellenseele 929 ist von einer äußeren Schutzabdeckung oder -hülle umgeben, in der sie rotieren kann. Wenn die Kupplung 100 geschlossen ist, kann über die biegsame Welle 27 ein Drehmoment übertragen werden.

Die Erfindung ist nicht auf eine spezielle Art der Übertragung von Antriebsleistung begrenzt. Es kann auch vorstellbar sein, hydraulische Aktuatoren mit einer hydraulischen Steuerung vorzusehen, die während des Parkierens über ein hydraulisches Ventil oder eine formschlüssige Kupplung miteinander verbunden werden.

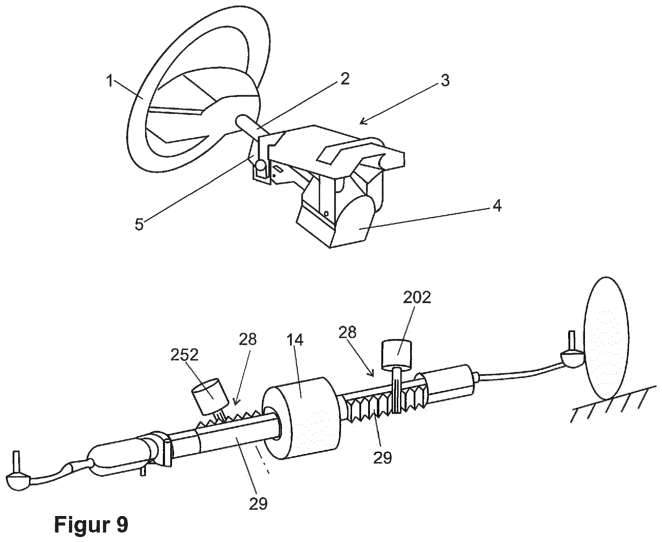

Figur 9 zeigt eine weitere Ausführungsform einer Steer-by-Wire-Lenkung mit einer Kupplung 14, die die Zahnstangen 29 der Ritzel-Zahnstangen-Systeme 28 der jeweiligen Einzelradlenkung 20, 25 miteinander koppelt und somit es erlaubt eine Translation zu übertragen. Dies kann beispielsweise mittels einer Klemmvorrichtung erfolgen, die die Zahnstangen 29 miteinander koppelt. Die Klemmvorrichtung kann zwei miteinander verbundene Backenfuttervorrichtungen umfassen, die durch einen Aktuator zwischen einen geklemmten und ungeklemmten Zustand schaltbar sind. Dabei sind die Zahnstangen im geklemmten Zustand unverschiebbar zu einander. Im ungeklemmten Zustand können die Zahnstangen relativ zueinander verschoben werden.

Die oben beschriebenen Systeme können auch für eine Allrad-Lenkung eingesetzt werden, so dass sowohl die Vorderräder als auch die Hinterräder die erfindungsgemäße Lenkvorrichtung aufweisen.

## Patentansprüche

1. Steer-by-Wire-Lenksystem für Kraftfahrzeuge mit wenigstens zwei auf die gelenkten Räder (201, 251) wirkenden, in Abhängigkeit eines Fahrerlenkwunsches elektronisch geregelten Lenkstellern, mit einem Rückstellmomente auf ein Lenkrad übertragenden Feedback-Aktuator (4), und einer Steuereinheit (6), die den Feedback-Aktuator (4) und die wenigstens zwei Lenksteller zur Erzeugung von Antriebsleistung ansteuert, wobei die wenigstens zwei Lenksteller jeweils einen Aktuator mit einer Abtriebswelle aufweisen, wobei in einem Normalfall jedem lenkbaren Fahrzeugrad (201, 251) ein einziger Lenksteller mit Aktuator in Form einer Einzelradlenkung (20, 25) zugeordnet ist und durch eine Drehung der Abtriebswelle des Aktuators (202, 252) eine Verdrehung des jeweiligen lenkbaren Fahrzeugrades (201, 205) um eine Schwenkachse (267) bewirkt wird, wobei eine schaltbare Kupplung (14, 100) vorgesehen ist, die derart ausgestaltet ist, dass sie im Normalfall geöffnet ist und in einem Sonderfall geschlossen ist, wobei die Kupplung (14, 100) im geschlossenen Zustand die Einzelradlenkungen (20, 25) derart miteinander verbindet, dass Antriebsleistung von einer Einzelradlenkung (20, 25) zu der anderen Einzelradlenkung (20, 25) zur Verdrehung eines lenkbaren Fahrzeugrades (201, 251) übertragen werden kann, **dadurch gekennzeichnet, dass** die steuerbare Kupplung (14, 100) mit wenigstens einem Aktuator (202, 252) über eine biegsame Welle (27) verbunden ist.

2. Steer-by-Wire-Lenksystem nach Anspruch 1, **dadurch gekennzeichnet, dass** die übertragene Antriebsleistung eine Rotation oder eine translatorische Bewegung bewirkt.

3. Steer-by-Wire-Lenksystem nach Anspruch 1 oder 2, **dadurch gekennzeichnet, dass** die schaltbare Kupplung (14, 100) im geschlossenen Zustand die Abtriebswellen der Aktuatoren (202, 252) drehfest koppelt.

4. Steer-by-Wire-Lenksystem nach einem der vorhergehenden Ansprüche, **dadurch gekennzeichnet, dass** die Kopplung der schaltbaren Kupplung (14, 100) formschlüssig erfolgt, wobei die Kupplung (14, 100) ein Verdrehspiel aufweist.

5. Steer-by-Wire-Lenksystem nach einem der vorhergehenden Ansprüche, **dadurch gekennzeichnet, dass** die steuerbare Kupplung (14, 100) hydraulisch oder elektromagnetisch ausgebildet ist.

6. Steer-by-Wire-Lenksystem nach einem der vorhergehenden Ansprüche, **dadurch gekennzeichnet, dass** die steuerbare Kupplung (14, 100) von der Steuereinheit (6) ansteuerbar ist.

7. Steer-by-Wire-Lenksystem nach einem der vorhergehenden Ansprüche, **dadurch gekennzeichnet, dass** die Aktuatoren (202, 252) Elektromotoren oder hydraulische Stellsysteme sind, wobei die Aktuatoren (202, 252) gemeinsam für die maximalen Spurstangenkräfte ausgelegt sind.

8. Steer-by-Wire-Lenksystem nach einem der vorhergehenden Ansprüche, **dadurch gekennzeichnet, dass** die wenigstens zwei Lenksteller bzw. Einzelradlenkungen (20, 25) Teil einer Allrad-Lenkung mit vier lenkbaren Fahrzeugrädern (201, 251) sind.

9. Verfahren zum Ansteuern eines Steer-by-Wire-Lenksystem eines Kraftfahrzeugs mit wenigstens zwei auf die gelenkten Räder (201, 251) wirkenden, in Abhängigkeit eines Fahrerlenkwunsches elektronisch geregelten Lenkstellern, mit einem Rückstellmomente auf ein Lenkrad übertragenden Feedback-Aktuator (4), und einer Steuereinheit (6), die den Feedback-Aktuator (4) und die wenigstens zwei Lenksteller zur Erzeugung von Antriebsleistung ansteuert, wobei die wenigstens zwei Lenksteller jeweils einen Aktuator (202, 252) mit einer Abtriebswelle aufweisen, wobei folgende Verfahrensschritte vorgesehen sind:
• Erfassen eines Zustandes des Kraftfahrzeugs, wobei zwischen einem Normalfall und dem Sonderfall Parkieren unterschieden wird;
• Ansteuern einer schaltbaren Kupplung (14, 100) in Abhängigkeit des erfassten Zustands,
**dadurch gekennzeichnet, dass**
- im Normalfall die Kupplung geöffnet wird oder geöffnet bleibt und jedem lenkbaren Fahrzeugrad (201, 251) ein einziger Lenksteller mit Aktuator (202, 252) in Form einer Einzelradlenkung (20, 25) zugeordnet ist und durch eine Drehung der Abtriebswelle des Aktuators (202, 252) eine Verdrehung des jeweiligen lenkbaren Fahrzeugrades (201, 205) um eine Schwenkachse (267) bewirkt wird und wobei
- im Sonderfall die Kupplung (14, 100) geschlossen wird, so dass Antriebsleistung von einer Einzelradlenkung (20, 25) zu der anderen Einzelradlenkung (20, 25) zur Verdrehung eines lenkbaren Fahrzeugrades übertragen wird.

10. Verfahren nach Anspruch 9, **dadurch gekennzeichnet, dass** die übertragene Antriebsleistung eine Rotation oder eine translatorische Bewegung bewirkt.

11. Verfahren nach Anspruch 9 oder 10, **dadurch gekennzeichnet, dass** die geschlossene Kupplung (14, 100) die Abtriebswellen der Aktuatoren (202, 252) drehfest koppelt.

12. Verfahren nach einem der vorhergehenden Ansprüche 9 bis 11, **dadurch gekennzeichnet, dass** die Kopplung der schaltbaren Kupplung (14, 100) formschlüssig erfolgt, wobei die Kupplung (14, 100) ein Verdrehspiel aufweist.

13. Verfahren nach einem der vorhergehenden Ansprüche 9 bis 12, **dadurch gekennzeichnet, dass** die steuerbare Kupplung (14, 100) mit wenigstens einem Aktuator (202, 252) über eine starre Welle verbunden ist.

14. Verfahren nach einem der vorhergehenden Ansprüche 9 bis 12, **dadurch gekennzeichnet, dass** die steuerbare Kupplung (14, 100) mit wenigstens einem Aktuator (202, 252) über eine biegsame Welle (27) verbunden ist.

15. Verfahren nach einem der vorhergehenden Ansprüche 9 bis 14, **dadurch gekennzeichnet, dass** die steuerbare Kupplung (14, 100) hydraulisch oder elektromagnetisch ausgebildet ist.

16. Verfahren nach einem der vorhergehenden Ansprüche 9 bis 15, **dadurch gekennzeichnet, dass** die steuerbare Kupplung (14, 100) von der Steuereinheit (6) angesteuert wird.

17. Verfahren nach einem der vorhergehenden Ansprüche 9 bis 16, **dadurch gekennzeichnet, dass** die Aktuatoren (202, 252) Elektromotoren oder hydraulische Stellsysteme sind, wobei die Aktuatoren (202, 252) gemeinsam für die maximalen Spurstangenkräfte ausgelegt sind.

## Claims

1. Steer-by-wire steering system for motor vehicles having at least two steering actuators which act on the steered wheels (201, 251) and which are electronically controlled in accordance with a steering wish of the driver, having a feedback actuator (4) which transmits restoring torques to a steering wheel, and a control unit (6) which controls the feedback actuator (4) and the at least two steering actuators in order to produce drive power, wherein the at least two steering actuators each comprise an actuator with an output shaft, wherein in a normal case there is associated with each steerable vehicle wheel (201, 251) a single steering actuator with an actuator in the form of a single-wheel steering system (20, 25) and by means of a rotation of the output shaft of the actuator (202, 252) a rotation of the respective steerable vehicle wheel (201, 205) about a pivot axis (267) is brought about, **wherein** there is provided a switchable coupling (14, 100) which is configured in such a manner that it is normally open and in a special case is closed, wherein the coupling (14, 100) in the closed state connects the single-wheel steering systems (20, 25) to each other in such a manner that drive power can be transmitted from one single-wheel steering system (20, 25) to the other single-wheel steering system (20, 25) in order to turn a steerable vehicle wheel (201, 251), **characterized in that** the controllable coupling (14, 100) is connected to at least one actuator (202, 252) by means of a bendable shaft (27).

2. Steer-by-wire steering system according to Claim 1, **characterized in that** the transmitted drive power brings about a rotation or a translational movement.

3. Steer-by-wire steering system according to Claim 1 or 2, **characterized in that** the switchable coupling (14, 100) in the closed state couples the output shafts of the actuators (202, 252) in a rotationally secure manner.

4. Steer-by-wire steering system according to one of the preceding claims, **characterized in that** the coupling of the switchable coupling (14, 100) is carried out in a positive-locking manner, wherein the coupling (14, 100) comprises a torsion backlash.

5. Steer-by-wire steering system according to one of the preceding claims, **characterized in that** the controllable coupling (14, 100) is constructed in a hydraulic or electromagnetic manner.

6. Steer-by-wire steering system according to one of the preceding claims, **characterized in that** the controllable coupling (14, 100) can be controlled by the control unit (6).

7. Steer-by-wire steering system according to one of the preceding claims, **characterized in that** the actuators (202, 252) are electric motors or hydraulic actuation systems, wherein the actuators (202, 252) are configured together for the maximum tie rod forces.

8. Steer-by-wire steering system according to one of the preceding claims, **characterized in that** the at least two steering actuators or single-wheel steering systems (20, 25) are part of an all-wheel steering system with four steerable vehicle wheels (201, 251).

9. Method for controlling a steer-by-wire steering system of a motor vehicle having at least two steering actuators which act on the steered wheels (201, 251) and which are electronically controlled in accordance with a steering wish of the driver, having a feedback actuator (4) which transmits restoring torques to a steering wheel, and a control unit (6) which controls the feedback actuator (4) and the at least two steering actuators for producing drive power, wherein the at least two steering actuators each comprise an actuator (202, 252) having an output shaft, **wherein** the following method steps are provided:
• detecting a state of the motor vehicle, wherein a distinction is made between a normal case and the special case of parking;
• controlling a switchable coupling (14, 100) in accordance with the detected state,
**characterized in that**
- in the normal case, the coupling is opened or remains opened and a single steering actuator having an actuator (202, 252) in the form of a single-wheel steering system (20, 25) is associated with each steerable vehicle wheel (201, 251) and, by means of a rotation of the output shaft of the actuator (202, 252), a rotation of the respective steerable vehicle wheel (201, 205) about a pivot axis (267) is brought about, and wherein
- in the special case, the coupling (14, 100) is closed in such a manner that drive power is transmitted from one single-wheel steering system (20, 25) to the other single-wheel steering system (20, 25) in order to turn a steerable vehicle wheel.

10. The method according to Claim 9, **characterized in that** the transmitted drive power brings about a rotation or a translational movement.

11. The method according to Claim 9 or 10, **characterized in that** the closed coupling (14, 100) couples the output shafts of the actuators (202, 252) in a rotationally secure manner.

12. The method according to one of the preceding Claims 9 to 11, **characterized in that** the coupling of the switchable coupling (14, 100) is carried out in a positive-locking manner, wherein the coupling (14, 100) comprises a torsion backlash.

13. The method according to one of the preceding Claims 9 to 12, **characterized in that** the controllable coupling (14, 100) is connected to at least one actuator (202, 252) by means of a rigid shaft.

14. The method according to one of the preceding Claims 9 to 12, **characterized in that** the controllable coupling (14, 100) is connected to at least one actuator (202, 252) by means of a bendable shaft (27).

15. The method according to one of the preceding Claims 9 to 14, **characterized in that** the controllable coupling (14, 100) is constructed in a hydraulic or electromagnetic manner.

16. The method according to one of the preceding Claims 9 to 15, **characterized in that** the controllable coupling (14, 100) is controlled by the control unit (6).

17. The method according to one of the preceding Claims 9 to 16, **characterized in that** the actuators (202, 252) are electric motors or hydraulic actuation systems, wherein the actuators (202, 252) are configured together for the maximum tie rod forces.

## Revendications

1. Système de direction à commande électrique « steer-by-wire » pour véhicules automobiles, comprenant au moins deux éléments de réglage de direction agissant sur les roues dirigées (201, 251) et réglés électroniquement en fonction d'une demande de direction du conducteur, comprenant un actionneur de rétroaction (4) transmettant des couples de rappel à un volant de direction, et une unité de commande (6) qui commande l'actionneur de rétroaction (4) et lesdits au moins deux éléments de réglage de direction pour produire une puissance d'entraînement, dans lequel lesdits au moins deux éléments de réglage de direction comprennent respectivement un actionneur doté d'un arbre de sortie, dans lequel, dans le cas normal, un élément de réglage de direction unique doté d'un actionneur sous la forme d'une direction de roue individuelle (20, 25) est associé à chaque roue de véhicule directrice (201, 251) et une rotation de la roue de véhicule directrice (201, 205) respective autour d'un axe de pivotement (267) est provoquée par une rotation de l'arbre de sortie de l'actionneur (202, 252), dans lequel un embrayage débrayable (14, 100) est prévu, lequel est configuré de telle sorte qu'il est ouvert dans le cas normal et est fermé dans un cas particulier, dans lequel l'embrayage (14, 100) à l'état fermé relie l'une à l'autre les directions de roue individuelles (20, 25) de telle sorte que la puissance d'entraînement peut être transmise d'une direction de roue individuelle (20, 25) à l'autre direction de roue individuelle (20, 25) pour la rotation d'une roue de véhicule directrice (201, 251), **caractérisé en ce que** l'embrayage (14, 100) pouvant être commandé est relié à au moins un actionneur (202, 252) par le biais d'un arbre flexible (27).

2. Système de direction à commande électrique « steer-by-wire » selon la revendication 1, **caractérisé en ce que** la puissance d'entraînement transmise provoque une rotation ou un mouvement de translation.

3. Système de direction à commande électrique « steer-by-wire » selon la revendication 1 ou 2, **caractérisé en ce que** l'embrayage débrayable (14, 100) à l'état fermé accouple de manière solidaire en rotation les arbres de sortie des actionneurs (202, 252).

4. Système de direction à commande électrique « steer-by-wire » selon l'une des revendications précédentes, **caractérisé en ce que** l'accouplement de l'embrayage débrayable (14, 100) s'effectue par complémentarité de forme, l'embrayage (14, 100) présentant un jeu angulaire.

5. Système de direction à commande électrique « steer-by-wire » selon l'une des revendications précédentes, **caractérisé en ce que** l'embrayage (14, 100) pouvant être commandé est réalisé de manière hydraulique ou électromagnétique.

6. Système de direction à commande électrique « steer-by-wire » selon l'une des revendications précédentes, **caractérisé en ce que** l'embrayage (14, 100) pouvant être commandé peut être commandé par l'unité de commande (6).

7. Système de direction à commande électrique « steer-by-wire » selon l'une des revendications précédentes, **caractérisé en ce que** les actionneurs (202, 252) sont des moteurs électriques ou des systèmes de réglage hydrauliques, les actionneurs (202, 252) étant conçus conjointement pour les forces de barre d'accouplement maximales.

8. Système de direction à commande électrique « steer-by-wire » selon l'une des revendications précédentes, **caractérisé en ce que** lesdits au moins deux éléments de réglage de direction ou directions de roue individuelles (20, 25) font partie d'une direction toutes roues motrices dotée de quatre roues de véhicule directrices (201, 251).

9. Procédé de commande d'un système de direction à commande électrique « steer-by-wire » d'un véhicule automobile comprenant au moins deux éléments de réglage de direction agissant sur les roues dirigées (201, 251) et réglés électroniquement en fonction d'une demande de direction du conducteur, comprenant un actionneur de rétroaction (4) transmettant des couples de rappel à un volant de direction, et une unité de commande (6) qui commande l'actionneur de rétroaction (4) et lesdits au moins deux éléments de réglage de direction pour produire une puissance d'entraînement, dans lequel lesdits au moins deux éléments de réglage de direction comprennent respectivement un actionneur (202, 252) doté d'un arbre de sortie, dans lequel les étapes de procédé suivantes sont prévues :
• détection d'un état du véhicule automobile, où l'on distingue entre un cas normal et le cas particulier d'un stationnement ;
• commande d'un embrayage débrayable (14, 100) en fonction de l'état détecté,
**caractérisé en ce que**
- dans le cas normal, l'embrayage est ouvert ou reste ouvert et un élément de réglage de direction unique doté d'un actionneur (202, 252) sous la forme d'une direction de roue individuelle (20, 25) est associé à chaque roue de véhicule directrice (201, 251) et une rotation de la roue de véhicule directrice (201, 205) respective autour d'un axe de pivotement (267) est provoquée par une rotation de l'arbre de sortie de l'actionneur (202, 252), et
- dans le cas particulier, l'embrayage (14, 100) étant fermé, de telle sorte que la puissance d'entraînement est transmise d'une direction de roue individuelle (20, 25) à l'autre direction de roue individuelle (20, 25) pour la rotation d'une roue de véhicule directrice.

10. Procédé selon la revendication 9, **caractérisé en ce que** la puissance d'entraînement transmise provoque une rotation ou un mouvement de translation.

11. Procédé selon la revendication 9 ou 10, **caractérisé en ce que** l'embrayage fermé (14, 100) accouple de manière solidaire en rotation les arbres de sortie des actionneurs (202, 252).

12. Procédé selon l'une des revendications précédentes 9 à 11, **caractérisé en ce que** l'accouplement de l'embrayage débrayable (14, 100) s'effectue par complémentarité de forme, l'embrayage (14, 100) présentant un jeu angulaire.

13. Procédé selon l'une des revendications précédentes 9 à 12, **caractérisé en ce que** l'embrayage (14, 100) pouvant être commandé est relié à au moins un actionneur (202, 252) par le biais d'un arbre rigide.

14. Procédé selon l'une des revendications précédentes 9 à 12, **caractérisé en ce que** l'embrayage (14, 100) pouvant être commandé est relié à au moins un actionneur (202, 252) par le biais d'un arbre flexible (27).

15. Procédé selon l'une des revendications précédentes 9 à 14, **caractérisé en ce que** l'embrayage (14, 100) pouvant être commandé est réalisé de manière hydraulique ou électromagnétique.

16. Procédé selon l'une des revendications précédentes 9 à 15, **caractérisé en ce que** l'embrayage (14, 100) pouvant être commandé est commandé par l'unité de commande (6).

17. Procédé selon l'une des revendications précédentes 9 à 16, **caractérisé en ce que** les actionneurs (202, 252) sont des moteurs électriques ou des systèmes de réglage hydrauliques, les actionneurs (202, 252) étant conçus conjointement pour les forces de barre d'accouplement maximales.
